# EUROPEAN PATENT APPLICATION

(11) **EP 4 345 960 A2**
(43) Date of publication of application: **03.04.2024**
(21) Application number: 22215870.1
(22) Date of filing: 22.12.2022
(51) Int. Cl.: H01M 10/04, H01M 50/209, H01M 50/262, H01M 50/264

(54) **SOLID-STATE BATTERY MODULE AND BATTERY PACK**

(30) Priority: 02.06.2022 CN 202210625656
(71) Applicant: AESC Japan Ltd., Kanagawa, 2520012 (JP)
(72) Inventor: ZHANG, Xu, Jiangyin City, Wuxi City (CN); FU, Fangkai, Jiangyin City, Wuxi City (CN); HE, Yafei, Jiangyin City, Wuxi City (CN)
(74) Representative: Becker, Eberhard

(57) **Abstract**

A solid-state battery module (1) and a battery pack belonging to the technical field of batteries are provided. The solid-state battery module (1) includes a casing (11) and a cell stack (12) disposed in the casing (11). The casing (11) includes a top plate (111), a bottom plate (112), and two side plates (113), The two side plates (113) are connected between the top plate (111) and the bottom plate (112), and the two side plates (113) are opposite to each other. At least one of the side plates (113) is able to move relative to the top plate (111) and the bottom plate (112) in a first direction. In the battery pack provided by the disclosure, each of the side plates (113) of the solid-state battery module (1) and the box body (2) are connected by a connecting piece (3). The connecting piece (3) is able to generate plastic deformation in the stacking direction of the cell stack (12).

## Description

### BACKGROUND

### Technical Field

The disclosure relates to the technical field of batteries, and in particular, relates to a solid-state battery module and a battery pack.

### Description of Related Art

A battery module includes a casing and a cell stack disposed in the casing. In order to allow the cell stack to be supported and protected, the side plates, the top plate, and the bottom plate of the casing are fixedly connected generally. However, in a solid-state battery module, since the cells may swell considerably, the use of the abovementioned casing may lead to problems such as deformation of the casing, damage to the cells, and the like. Battery performance may thus be affected and potential safety hazards may occur.

### SUMMARY

The disclosure aims to provide a solid-state battery module and a battery pack to solve the problems of casing deformation and cell damage caused by the swelling of the cells.

To achieve the above, the following technical solutions are provided.

The disclosure provides a solid-state battery module including a casing and a cell stack disposed in the casing,
wherein the casing includes:
a top plate and a bottom plate opposite to each other; and
two side plates, wherein the two side plates are connected between the top plate and the bottom plate, and the two side plates are opposite to each other,
at least one of the side plates is able to move relative to the top plate and the bottom plate in a first direction, and the first direction is a stacking direction of the cell stack.

As an optional solution of the solid-state battery module, the top plate is provided with a first sliding rail extending in the first direction, and at least one of the side plates is slidably connected to the first sliding rail,
the bottom plate is provided with a second sliding rail extending in the first direction, and at least one of the side plates is slidably connected to the second sliding rail.

As an optional solution of the solid-state battery module, the top plate is provided with a plurality of first deformation portions, the first deformation portions are disposed between the two side plates, and the first deformation portions are able to produce plastic deformation in the first direction,
the bottom plate is provided with a plurality of second deformation portions, the second deformation portions are disposed between the two side plates, and the second deformation portions are able to produce plastic deformation in the first direction.

As an optional solution of the solid-state battery module, the first deformation portions are first protrusions or first recesses disposed on the top plate,
the second deformation portions are second protrusions or second recesses disposed on the bottom plate.

As an optional solution of the solid-state battery module, the first protrusions or the first recesses are arranged in a length direction of the top plate,
the second protrusions or the second recesses are arranged in a length direction of the bottom plate.

As an optional solution of the solid-state battery module, a length of the first protrusions or a length of the first recesses is equal to a length of the top plate,
a length of the second protrusions or a length of the second recesses is equal to a length of the bottom plate.

As an optional solution of the solid-state battery module, the first protrusions or the first recesses are provided with through slots, and the number of through slots is N, then N is a natural number greater than or equal to 1, and/or
the second protrusions or the second recesses are provided with through slots, and the number of through slots is N, then N is a natural number greater than or equal to 1.

As an optional solution of the solid-state battery module, each of the through slots is provided with a first adjustment connecting piece capable of producing plastic deformation. Both ends of the first adjustment connecting piece are fixedly connected to the top plate or the bottom plate in the first direction.

As an optional solution of the solid-state battery module, the side plates are provided with connecting portions, and the connecting portions are configured to be connected to a battery pack.

The disclosure further provides a battery pack including:
a box body;
the above mentioned solid-state battery module disposed in the box body; and
a connecting piece connected between one side plate of the solid-state battery module and the box body, and the connecting piece is able to produce plastic deformation in the first direction.

As an optional solution of the battery pack, the connecting piece is made of low carbon steel, aluminum alloy, or plastic steel.

As an optional solution of the battery pack, the connecting piece includes:
a first portion, connected to one side plate of the casing;
a second portion, located on one side of the first portion away from the side plate and is fixedly connected to the box body; and
a third portion, fixedly connected between the first portion and the second portion.

As an optional solution of the battery pack, the third portion is disposed obliquely.

As an optional solution of the battery pack, the third portion includes a plurality of connecting split parts, and two ends of each of the connecting split parts are fixedly connected to the first portion and the second portion,
a gap is provided between two adjacent connecting split parts.

As an optional solution of the battery pack, the battery pack further includes a second adjustment connecting piece capable of producing plastic deformation, and the second adjustment connecting piece is fixedly connected to the first portion and the second portion and is located in the gap.

As an optional solution of the battery pack, the first portion and the side plate are fixedly connected by a threaded fastener,
the second portion and the box body are fixedly connected by a threaded fastener.

As an optional solution of the battery pack, the first portion is welded and fixed to the side plates,
the second portion is welded and fixed to the box body.

Compared to the related art, beneficial effects of the disclosure include the following.

In the solid-state battery module provided by the disclosure, the cell stack is disposed in the casing. Further, when the cells swell, the side plates of the casing are able to move relative to the top plate and the bottom plate in the stacking direction of the cell stack. In this way, problems such as deformation of the casing and damage to the cells caused by excessive pressure applied on the side plates by the internal cells are prevented from occurring, so the performance and safety of the batteries are improved.

In the battery pack provided by the disclosure, each of the side plates of the solid-state battery module and the box body are connected by the connecting piece. Further, the connecting piece is able to generate plastic deformation in the stacking direction of the cell stack. When the cells swell, the connecting piece may absorb the deformation of the module in the swelling direction of the cells without damaging the structure of the module. In this way, the problem of breakage of the connecting piece may not easily occur, and the connection stability between the battery module and the battery box is improved.

### BRIEF DESCRIPTION OF THE DRAWINGS

FIG. 1 is a schematic view of a connection relationship between a battery module and a battery box body according to an embodiment of the disclosure.
FIG. 2 is an exploded view of FIG. 1.
FIG. 3 is an exploded view of a top plate and first adjustment connecting pieces according to an embodiment of the disclosure.
FIG. 4 is an exploded view of a connecting piece and second adjustment connecting pieces according to an embodiment of the disclosure.

### DESCRIPTION OF THE EMBODIMENTS

In order to make the objectives, technical solutions, and advantages of the embodiments of the disclosure clearer, description will now be made in detail to clearly and completely present preferred embodiments of the disclosure, examples of which are illustrated in the accompanying drawings. Nevertheless, the disclosed embodiments are merely part of the embodiments of the disclosure, not all the embodiments. The components of the embodiments of the disclosure generally described and illustrated in the drawings herein may be arranged and designed in a variety of different configurations.

Therefore, the following detailed description of the embodiments of the disclosure provided in the accompanying drawings is not intended to limit the scope of the disclosure as claimed, but is merely representative of selected embodiments of the disclosure. Based on the embodiments of the disclosure, all other embodiments obtained by a person having ordinary skill in the art without making any inventive effort fall within the scope that the disclosure seeks to protect.

It should be noted that similar numerals and letters refer to similar items in the following figures. Therefore, once an element is defined in one figure, no further definition and explanation of the element is required in subsequent figures.

In the description of the disclosure, it should be noted that the orientation or positional relationship indicated by the terms "up", "down", "left", "right", "vertical", "horizontal", "inner", "outer", etc. is based on the orientation or positional relationship shown in the drawings or the orientation or positional relationship that the inventive product is usually placed in use. These terms are provided to facilitate the description of the disclosure and simplify the description and are not intended to indicate or imply that the indicated device or element must have a specific orientation or be constructed and operated in a specific orientation, so cannot be understood as limiting the disclosure. Further, the terms "first", "second", "third", etc. are only used to differentiate the description and should not be construed as indicating or implying relative importance. In the description of the disclosure, unless otherwise specified, "plurality" means two or more than two.

In the description of the disclosure, it should be noted that unless clearly specified and defined otherwise, the terms "disposed" and "connected" should be understood in a broad sense, for instance, it can be a fixed connection, a detachable connection, an integral connection, a mechanical connection, or an electrical connection. For a person having ordinary skill in the art, the specific meaning of the abovementioned terms in the disclosure can be understood according to specific circumstances.

In the disclosure, unless otherwise clearly specified and defined, the first feature being "above" or "below" the second feature may include direct contact between the first and second features or may include the first and second features not being in direct contact but being in contact through other features between them. Further, the first feature being "on", "above", and "upon" the second feature include that the first feature is directly above and obliquely above the second feature, or it may simply mean that the first feature is higher in level than the second feature. The first feature being "under", "below", and "beneath" the second feature include that the first feature is directly below and obliquely below the second feature, or it may simply mean that the first feature is lower in level than the second feature.

The embodiments of the disclosure are provided in detail as follows. Examples of the embodiments are shown in the drawings, in which the same or similar reference numerals indicate the same or similar elements or elements with the same or similar functions throughout. The embodiments described below with reference to the accompanying drawings are exemplary, and are merely intended to explain the disclosure, but should not be construed as limiting the disclosure.

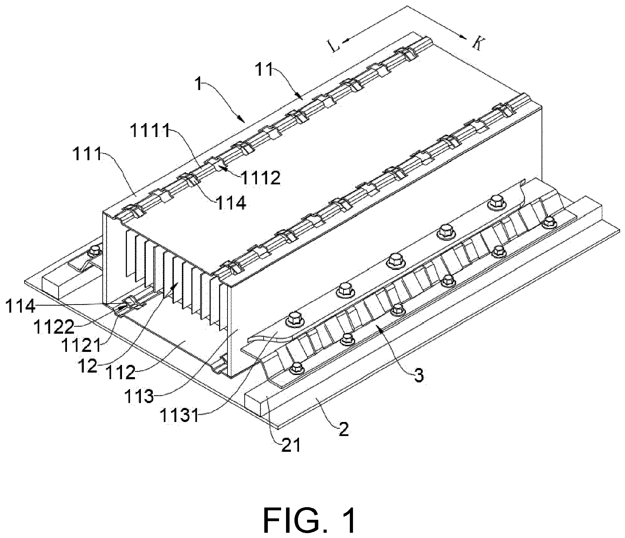

As shown in FIG. 1 to FIG. 4, the present embodiment provides a solid-state battery module 1 including a casing 11 and a cell stack 12 disposed in the casing 11. The cell stack 12 is a whole formed by arranging and stacking a plurality of cells 121 in sequence and specifically is a collection of cells in which the large surfaces of the cells 121 are stacked adjacent to each other. The large surfaces of the cells 121 are the surfaces with the largest area of the cells 121. The casing 11 includes a top plate 111, a bottom plate 112, and two side plates 113, and the top plate 111 and the bottom plate 112 are opposite to each other. The two side plates 113 are connected between the top plate 111 and the bottom plate 112, and the two side plates 113 are opposite to each other. At least one of the side plates 113 is able to move relative to the top plate 111 and the bottom plate 112 in a first direction, and the first direction is a stacking direction of the cell stack 12.

The cell stack 12 is disposed in the casing 11, and when the cells swell, the side plates 113 of the casing 11 can move relative to the top plate 111 and the bottom plate 112 in the stacking direction of the cell stack 12. In this way, problems such as deformation of the casing 11 and damage to the cells caused by excessive pressure applied on the side plates 113 by the internal cells 121 are prevented from occurring, so the performance and safety of the batteries are improved.

It should be noted that the shapes and sizes of the top plate 111 and the bottom plate 112 are the same. In this embodiment, as shown in FIG. 1, the top plate 111 and the bottom plate 112 are both rectangular, and a width direction K of the top plate 111 and the bottom plate 112 is the stacking direction of the cell stack 12. That is, the width direction of the top plate 111 and the bottom plate 112 is the abovementioned first direction, and a length direction L of the top plate 111 and the bottom plate 112 is perpendicular to the first direction.

In an embodiment, the top plate 111 is provided with a plurality of first deformation portions. The first deformation portions are disposed between the two side plates 113, and the first deformation portions are able to produce plastic deformation in the first direction, so that the width dimension of the top plate 111 can be increased. In other words, when the cells are swollen, the two side plates 113 can be moved relative to the top plate 111 in the stacking direction of the cell stack 12. Problems such as deformation of the casing 11 and damage to the cells may thus be prevented from occurring. The bottom plate 112 is provided with a plurality of second deformation portions. The second deformation portions are disposed between the two side plates 113, and the second deformation portions are able to produce plastic deformation in the first direction, so that the width dimension of the bottom plate 112 can be increased. In other words, when the cells are swollen, the two side plates 113 can be moved relative to the bottom plate 112 in the stacking direction of the cell stack 12. Problems such as deformation of the casing 11 and damage to the cells may thus be prevented from occurring.

In an embodiment, the first deformation portions are first protrusions 1111 or first recesses disposed on the top plate 111, and the second deformation portions are second protrusions 1121 or second recesses disposed on the bottom plate 112. It should be noted that, by providing protrusions or recesses, when the cells swell, the protrusions or recesses are subjected to the pulling forces of the side plates 113 and gradually tend to be flush with the top plate 111 or the bottom plate 112, and even the protrusions or recesses may disappear. In this way, the distance between the two side plates 113 is increased, and the swelling of the cells is compensated.

In this embodiment, the first deformation portions are the first protrusions 1111 provided on the top plate 111. Further, the first protrusions 1111 protrude in a direction away from the bottom plate 112, so that the side surface of the top plate 111 facing the cells is flat and does not interfere with the cells. The second deformation portions are the second protrusions 1121 provided on the bottom plate 112. Further, the second protrusions 1121 protrude in a direction away from the top plate 111, so that the side surface of the bottom plate 112 facing the cells is flat and does not interfere with the cells.

In an embodiment, the first protrusions 111 or the first recesses extend in the length direction of the top plate 111, and the second protrusions 1121 or the second recesses extend in the length direction of the bottom plate 112. In this way, the first protrusions 1111 or the first recesses and the second protrusions 1121 or the second recesses may generate plastic deformation easily under the action of the swelling force of the cells.

In an embodiment, a length of the first protrusions 1111 or a length of the first recesses is equal to the length of the top plate 111, and the length of the second protrusions 1121 or a length of the second recesses is equal to the length of the bottom plate 112. In this way, it is ensured that the width of the top plate 111 and the width of the bottom plate 112 may be increased as a whole, and the top plate 111 and the bottom plate 112 may be matched with the swollen cells, so the performance of the cells is not affected.

In an embodiment, the first protrusions 1111 or the first recesses are provided with through slots, and/or the second protrusions 1121 or the second recesses are provided with through slots, and the number of through slots is N, then N is a natural number greater than or equal to 1. Through the arrangement of the through slots, the amount and speed of deformation of the first protrusions 1111 or the first recesses and the second protrusions 1121 or the second recesses may be adjusted to better match the amount and speed of swelling of the cells.

In this embodiment, the first protrusions 1111 and the second protrusions 1121 are both provided with the through slots. For the convenience of description, the through slots provided in the first protrusions 1111 are denoted as first through slots 1112, and the through slots provided in the second protrusions 1121 are denoted as second through slots 1122. To be specific, two first protrusions 1111 are provided, and the two first protrusions 1111 are provided at both ends of the top plate 111 in the width direction. Each of the first protrusions 1111 is provided with a plurality of first through slots 1112, so that when the cells swell, the side plate 113 may plastically deform the first protrusion 1111 rapidly. Two first protrusions 1121 are provided, and the two second protrusions 1121 are provided at both ends of the bottom plate 112 in the width direction. Each of the second protrusions 1121 is provided with a plurality of second through slots 1122, so that when the cells swell, the side plate 113 may plastically deform the second protrusion 1121 rapidly.

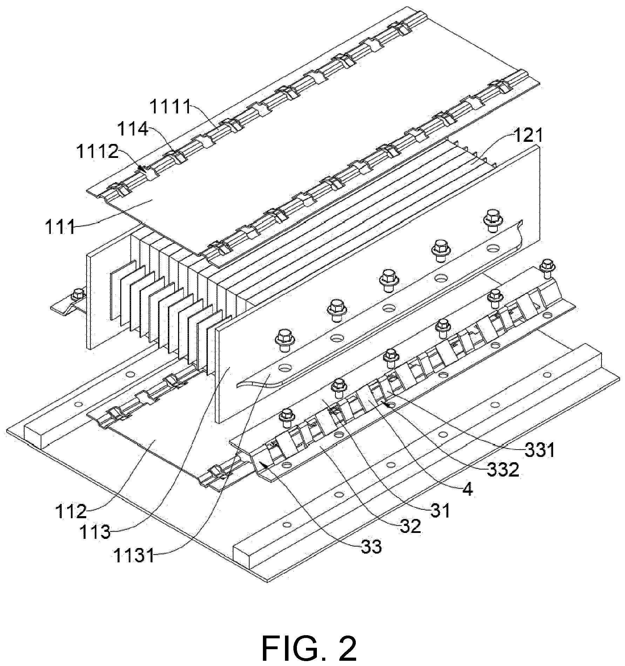

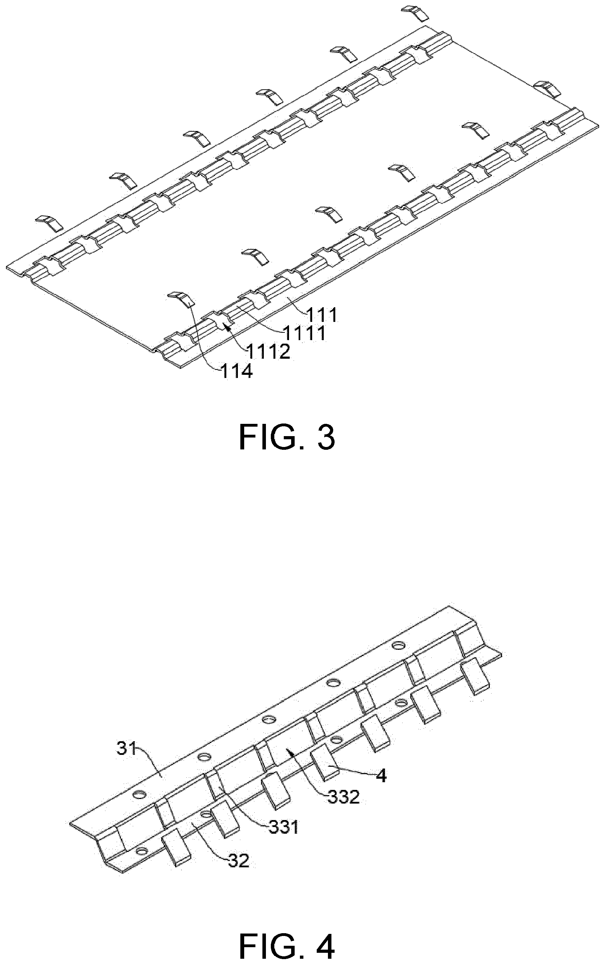

In an embodiment, as shown in FIG. 3 together with FIG. 1 and FIG. 2, a first adjustment connecting piece 114 capable of generating plastic deformation is provided in one through slot, and both ends of the first adjustment connecting piece 114 are connected to the top plate 111 or the bottom plate 112 in the first direction. The first adjustment connecting piece may be deployed to improve the strength of the first protrusions 1111 or the first recesses and the second protrusions 1121 or the second recesses, and the amount and speed of deformation the first protrusions 1111 or the first recesses and the second protrusions 1121 or the second recesses may thus be adjusted.

In other embodiments, the top plate 111 is provided with a first sliding rail extending in the first direction, and at least one of the side plates 113 is slidably connected to the first sliding rail. The bottom plate 112 is provided with a second sliding rail extending in the first direction, and at least one of the side plates 113 is slidably connected to the second sliding rail. With this arrangement, the purpose of enabling the side plates 113 to move relative to the top plate 111 and the bottom plate 112 in the stacking direction of the cell stack 12 may also be achieved.

In an embodiment, each of the side plates 113 is provided with a connecting portion 1131. The connecting portion 1131 is configured to be connected to a battery pack, so that the side plate 113 is prevented from being deformed or damaged compared to the form in which the side plate is directly connected to a battery pack.

The present embodiment further provides a battery pack. As shown in FIG. 1 to FIG. 2, the battery pack includes a box body 2, a connecting piece 3, and the solid-state battery module 1 as described above, and the battery module is disposed in the box body 2. The connecting piece 3 is connected between one side plate 113 of the solid-state battery module 1 and the box body 2, and the connecting piece 3 is able to produce plastic deformation in the first direction.

The side plate 113 of the solid-state battery module 1 and the box body 2 are connected by the connecting piece 3, and the connecting piece 3 may produce plastic deformation in the stacking direction of the cell stack 12. When the cells swell, the connecting piece 3 may absorb the deformation of the solid-state battery module 1 in the swelling direction of the cells 121 without damaging the structure of the module. In this way, the problem of breakage of the connecting piece 3 may not easily occur, and the connection stability between the battery module and the battery box 2 is improved.

In an embodiment, the connecting piece 3 is made of low carbon steel, aluminum alloy, or plastic steel. Certainly, the connecting piece 3 can also be made of other steel materials with higher plasticity, and other metal or non-metallic materials with better plasticity may also be used, which is not limited herein.

In this embodiment, the connecting piece 3 is made of low carbon steel, which not only meets the requirements of plastic deformation but also exhibits strength as needed, so the stability of the connection between the casing 11 and the box body 2 is ensured.

In an embodiment, the connecting piece 3 includes a first portion 31, a second portion 32, and a third portion 33. The first portion 31 is connected to one side plate 113 of the casing 11. The second portion 32 is located on one side of the first portion 31 away from the side plate 113 and is fixedly connected to the box body 2. The third portion is fixedly connected between the first portion 31 and the second portion 32. In this way, the first portion 31 and the second portion 32 move relative to each other, so that the connecting piece 3 produces plastic deformation.

In an embodiment, the third portion is disposed obliquely, so that the third portion 33 may support the first portion 31 and the second portion 32 to a certain extent and also facilitate the relative movement of the first portion 31 and the second portion 32, and the connecting piece 3 produces plastic deformation in this way.

In an embodiment, the third portion 33 includes a plurality of connecting split parts 331, and two ends of each of the connecting split parts 331 are fixedly connected to the first portion 31 and the second portion 32. A gap 332 is provided between two adjacent connecting split parts 331. Through such an arrangement, the amount and speed of deformation of the connecting piece 3 may be adjusted to match the amount and speed of swelling of the cells.

In an embodiment, As shown in FIG. 4 together with FIG. 1 and FIG. 2, the battery pack further includes a second adjustment connecting piece 4 capable of producing plastic deformation, and the second adjustment connecting piece 4 is fixedly connected to the first portion 31 and the second portion 32 and is located in the gap 332. The second adjustment connecting piece is deployed to improve the strength of the third portion 33, and the amount and speed of deformation of the connecting piece 3 may thus be adjusted.

In an embodiment, the first portion 31 and the side plate 113 are fixedly connected by a threaded fastener, and disassembly, assembly, and subsequent maintenance may be conveniently performed in this way. The second portion 32 and the box body 2 are fixedly connected by a threaded fastener, and disassembly, assembly, and subsequent maintenance may be conveniently performed in this way.

In this embodiment, the first portion 31 and the connecting portion 1131 are fixedly connected by a bolt, and the second portion and a horizontal beam or a longitudinal beam 21 of the box body 2 are fixedly connected by a bolt, so that disassembly and assembly may be conveniently performed, and good connection stability is provided.

In other embodiments, the first portion 31 and the side plate 113 may also be arranged to be welded and fixed to improve the connection stability, and the second portion 32 may be welded and fixed to the box body 2 to improve the connection stability.

Note that the above are only preferred embodiments of the disclosure and applied technical principles. A person having ordinary skill in the art will understand that the disclosure is not limited to the specific embodiments described herein. Various obvious changes, readjustments, and substitutions can be made by a person having ordinary skill in the art without departing from the protection scope of the disclosure. Therefore, although the disclosure has been described in detail through the above embodiments, the disclosure is not limited to the above embodiments. Still other equivalent embodiments may be included without departing from the inventive concept, and the scope of the disclosure is determined by the scope of the appended claims.

## Claims

1. A solid-state battery module (1), comprising a casing (11) and a cell stack (12) disposed in the casing (11),
wherein the casing (11) comprises:
a top plate (111) and a bottom plate (112) opposite to each other; and
two side plates (113), wherein the two side plates (113) are connected between the top plate (111) and the bottom plate (112), and the two side plates (113) are opposite to each other,
wherein at least one of the side plates (113) is able to move relative to the top plate (111) and the bottom plate (112) in a first direction, and the first direction is a stacking direction of the cell stack (12).

2. The solid-state battery module (1) according to claim 1, wherein the top plate (111) is provided with a first sliding rail extending in the first direction, and at least one of the side plates (113) is slidably connected to the first sliding rail,
the bottom plate (112) is provided with a second sliding rail extending in the first direction, and at least one of the side plates (113) is slidably connected to the second sliding rail.

3. The solid-state battery module (1) according to claim 1 or 2, wherein the top plate (111) is provided with a plurality of first deformation portions, the first deformation portions are disposed between the two side plates (113), and the first deformation portions are able to produce plastic deformation in the first direction,
the bottom plate (112) is provided with a plurality of second deformation portions, the second deformation portions are disposed between the two side plates (113), and the second deformation portions are able to produce plastic deformation in the first direction.

4. The solid-state battery module (1) according to any one of claims 1-3, wherein the first deformation portions are first protrusions (1111) or first recesses disposed on the top plate (111), and
the second deformation portions are second protrusions (1121) or second recesses disposed on the bottom plate (112).

5. The solid-state battery module (1) according to any one of claims 1-4, wherein the first protrusions (1111) or the first recesses are arranged in a length direction of the top plate (111), and
the second protrusions (1121) or the second recesses are arranged in a length direction of the bottom plate (112).

6. The solid-state battery module (1) according to any one of claims 1-5, wherein the first protrusions (1111) or the first recesses are provided with through slots (1112), and the number of through slots (1112) is N, then N is a natural number greater than or equal to 1, and/or
the second protrusions (1121) or the second recesses are provided with through slots (1122), and the number of through slots (1122) is N, then N is a natural number greater than or equal to 1.

7. The solid-state battery module (1) according to any one of claims 1-6, wherein each of the through slots (1112, 1122) is provided with a first adjustment connecting piece (114) capable of producing plastic deformation, and both ends of the first adjustment connecting piece (114) are fixedly connected to the top plate (111) or the bottom plate (112) in the first direction.

8. The solid-state battery module (1) according to any one of claims 1-7, wherein the side plates (113) are provided with connecting portions (1131), and the connecting portions (1131) are configured to be connected to a battery pack.

9. A battery pack, comprising:
a box body (2);
the solid-state battery module (1) according to claim 1-8, wherein the solid-state battery module (1) is disposed in the box body (2); and
a connecting piece (3), connected between one side plate of the solid-state battery module (1) and the box body (2), wherein the connecting piece (3) is able to produce plastic deformation in the first direction.

10. The battery pack according to claim 9, wherein the connecting piece (3) comprises:
a first portion (31) connected to one of the side plates (113) of the casing (11);
a second portion (32) located on one side of the first portion (31) away from the side plate (113) and fixedly connected to the box body (2); and
a third portion (33) fixedly connected between the first portion (31) and the second portion (32).

11. The battery pack according to any one of claims 9-10, wherein the third portion (33) is disposed obliquely.

12. The battery pack according to any one of claims 9-10, wherein the third portion (33) comprises a plurality of connecting split parts (331), and two ends of each of the connecting split parts (331) are fixedly connected to the first portion (31) and the second portion (32),
a gap (332) is provided between two adjacent connecting split parts (331).

13. The battery pack according to any one of claim 9-12, further comprising a second adjustment connecting piece (4) capable of producing plastic deformation, wherein the second adjustment connecting piece (4) is fixedly connected to the first portion (31) and the second portion (32) and located in the gap (332).

14. The battery pack according to any one of claims 9-10, wherein the first portion (31) is fixedly connected to one of the side plates (113) by a threaded fastener, and
the second portion (32) and the box body (2) are fixedly connected by a threaded fastener.

15. The battery pack according to any one of claims 9-10, wherein the first portion (31) is welded and fixed to the side plates (113), and
the second portion (32) is welded and fixed to the box body (2).
